# EUROPÄISCHE PATENTSCHRIFT

(11) **EP 2 708 107 B1**
(45) Veröffentlichungstag und Bekanntmachung des Hinweises auf die Patenterteilung: **07.09.2016**
(21) Anmeldenummer: 13172593.9
(22) Anmeldetag: 19.06.2013
(51) Int. Cl.: A01D 41/12

(54) **Selbstfahrender Mähdrescher**
Self-propelled combine harvester
Moissonneuse-batteuse automotrice

(30) Priorität: 14.09.2012 DE 102012108607
(43) Veröffentlichungstag der Anmeldung: 19.03.2014
(73) Patentinhaber: CLAAS Selbstfahrende Erntemaschinen GmbH, 33428 Harsewinkel (DE)
(72) Erfinder: Kucerin, Sergej, 32602 Vlotho (DE); Nollmann, Jürgen, 33775 Versmold (DE); Niehüser, Wilhelm, 33449 Langenberg (DE); Amsbeck, Dieter, 33428 Harsewinkel (DE); Brinkmann, Jörn, 33428 Harsewinkel (DE)

(56) Entgegenhaltungen:
- EP-A1- 0 635 198
- EP-A2- 2 298 061

## Beschreibung

Die Erfindung betrifft gemäß dem Oberbegriff des Patentanspruchs 1 einen selbstfahrenden Mähdrescher mit einer in dessen Heckbereich angeordneten, mit Stroh aus einer Einrichtung zur Restkornabscheidung beaufschlagten Streueinrichtung zum Verteilen des Strohs , wobei die Streueinrichtung aus zumindest zwei als Wurfgebläse wirkenden Schleuderscheiben besteht, die in einer Arbeitsstellung im Wesentlichen horizontal angeordnet sind, jeweils über Antriebselemente gegenläufig angetrieben werden und an ihren mit Stroh beaufschlagten Stirnflächen radial verlaufende Mitnehmer aufweisen wobei die Schleuderscheiben jeweils um eine in Längsrichtung des Mähdreschers verlaufenden Achse aus einer um divesentlichen horizontalen lage heraus verschwenhlar sind. Bei der Getreide- oder Rapsernte mittels eines Mähdreschers wird das von einem Schneidwerk bodennah abgeschnittene Erntegut aufgenommen und über einen Schrägförderer in eine Dresch- und Trenneinrichtung gefördert. Von dort aus gelangt das ausgedroschene Stroh in eine Einrichtung zur Restkornabscheidung, die in der Regel als eine Anzahl von Hordenschüttlern ausgebildet ist. Die Hordenschüttler werden schwingend bewegt und weisen Fallstufen sowie Schüttlerrücklauftaschen auf, über die das aus dem Stroh abgeschiedene Restkorn gemeinsam mit Verunreinigungen auf einen geriffelten Rücklaufboden gelangt. Es sind aber auch Axialflusssysteme bekannt, bei denen die Einrichtung zur Restkornabscheidung zumindest einen in axialer Richtung fördernden Rotor und einen diesen teilweise umschließenden Abscheidekorb aufweist. Dabei wird das aus einem Tangentialdreschwerk austretende Stroh, über eine Strohwendetrommel dem in Längsrichtung des Mähdreschers verlaufenden Abscheidekorb zugeführt. Anschließend wird das Stroh mittels des Rotors unter Abscheidung des Restkorns durch den Abscheidekorb gefördert wird und verlässt diesen schließlich am Heck des Mähdreschers. Schließlich besteht auch die Möglichkeit, eine Gesamtanordnung eines Dreschwerks und einer Einrichtung zur Restkornabscheidung in Form eines Axialflusssystems vorzusehen.

Handelt es sich bei dem austretenden Stroh um ausgedroschene Rapsstängel, so werden diese generell mittels eines Anbau- bzw. Strohhäckslers in feine Bestandteile zerhäckselt. Wird mit dem Mähdrescher Getreide geerntet, so kann das aus der Einrichtung zur Restkornabscheidung austretende Stroh ebenfalls über einen entsprechenden Strohhäcksler zerkleinert werden, oder es wird ungehäckselt als Schwad auf den Stoppeln abgelegt, so dass dieses im Schwad abgelegte Stroh anschließend in einem weiteren Arbeitsgang von einer mit einer Pick-up versehenen Ballenpresse aufgenommen werden kann. Der Strohhäcksler, der aus einem Rotor mit einer Vielzahl von umlaufenden Messern und einem Korb mit feststehenden Gegenmessern besteht, ist zu diesem Zweck zu- und abschaltbar und kann aus einer Arbeitsposition heraus in eine Ruheposition verschwenkt werden, in der die zuvor erläuterte Schwadablage des Strohs erfolgen kann.

Die Vorrichtung zum Verteilen von Stroh gemäß der vorliegenden Erfindung ist von wesentlicher Bedeutung für den Betrieb des Mähdreschers mit oder ohne Strohhäcksler. Im Hinblick auf die nach der Ernte durchzuführende Bodenbearbeitung ist es erforderlich, das Stroh, sei es gehäckselt oder ungehäckselt, gleichmäßig über die abgeerntete Fläche zu verteilen, damit es gleichmäßig in den Boden eingearbeitet werden und dort verrotten kann. Wenn das Stroh nicht gleichmäßig im Boden verteilt wird und sich stattdessen Strohnester bilden, wird dadurch die Bodengare in erheblichem Umfang negativ beeinflusst.

In der Vergangenheit wurde versucht, eine entsprechende Verteilung des Häckselgutes mit Hilfe von dem Strohhäcksler nachgeordneten Leiteinrichtungen mit entsprechend verstellbaren Leitblechen zu erzielen. Mit zunehmender Arbeitsbreite der am Mähdrescher vorgesehenen Erntevorsätze erhöht sich aber analog dazu auch die Breite, mit der der Strohhäcksler das zerkleinerte Stroh im heckseitigen Bereich des Mähdreschers austragen muss. Eine gleichmäßige Verteilung des Strohs oder des Strohhäcksels über die Arbeitsbreite des Erntevorsatzes lässt sich aber nur noch dadurch erzielen, dass der Einrichtung zur Restkornabscheidung oder dem Strohhäcksler eine Vorrichtung zum Verteilen des unzerkleinerten oder zerkleinerten Ströhs nachgeschaltet wird. Diese kann als Wurfgebläse ausgebildet sein, dessen mit Mitnehmern versehenen horizontal angeordneten Schleuderscheiben das Stroh oder das Häckselgut erfassen und über die aktuelle Schnittbreite auf dem Feld verteilen. Diese horizontal angeordneten Schleuderscheiben rotieren um eine vertikale Achse.

Ein selbstfahrender Mähdrescher ist aus der DE 10 2010 003 907 A1 bekannt. Dieser Mähdrescher weist ein Axialflusssystem auf, d. h., die Erntegutbearbeitungseinheit besteht aus einem sich in Längsrichtung des Mähdreschers erstreckenden Rotor, der von unterschiedlichen, hohlzylindrisch ausgebildeten Korbabschnitten umgeben ist. Der erste Korbabschnitt bildet gemeinsam mit dem Rotor eine Drescheinrichtung, während der sich daran anschließende Korbabschnitt gemeinsam mit dem Rotor als Einrichtung zur Restkornabscheidung dient. Das aus letztgenanntem Korbabschnitt austretende Stroh wird über eine Auswurftrommel und einen weiteren Trommelförderer in einen Strohhäcksler gefördert. Dieser Strohhäcksler wirkt mit einer Streueinrichtung zusammen, die über gegenläufig angetriebene Schleuderscheiben das Häckselgut über den vom Erntevorsatz des Mähdreschers abgeernteten Streifen verteilt. Zwischen den gegenläufig angetriebenen-Schleuderscheiben ist eine Leiteinrichtung angeordnet, und die Schleuderscheiben sind im Übrigen mit Teilummantelungen versehen, die jeweils Durcfilässe, über die das gehäckselte Stroh auf das Feld strömen kann, begrenzen. Weiterhin ist im Bereich des Austritts der Streueinrichtung ein bewegliches Führungselement vorgesehen, das schwingend bewegt werden soll. Die Schleuderscheiben sind dabei durch Halterungen am Rahmen des Mähdreschers und/oder an einer Rutsche, über die das Strohhäcksel zugeführt wird, befestigt.

Außerdem ist aus der DE 298 22 621 U1 ein Spreuverteiler eines Mähdreschers bekannt, der die mittels eines Reinigungsgebläses im Bereich der Siebe von den Körnern getrennte Spreu erfassen und über die geerntete Fläche verteilen soll. Es ist das Ziel durch diese gleichmäßige Verteilung der Spreu im abgeernteten Streifen zu verhindern, dass die in der Spreu enthaltenen keimfähigen Teilchen, wie z. B. Minderkorn, Unkrautsamen und dergleichen in schmalen Streifen auf dem Feld abgelegt werden und dort zum einen für einen unerwünschten Wuchs und zum anderen zur Anhäufung von im Boden verrottendem Material sorgen. Der Spreuverteiler weist zwei Spreuverteilergehäuse und darin angeordnete Laufräder mit Flügeln auf. Dabei kann die Auswurfrichtung mittels der verschwenkbar ausgebildeten Spreuverteilergehäuse den jeweiligen Bedingungen angepasst werden. Zu diesem Zweck sind die entsprechenden Spreuverteilergehäuse schwenkbar an einem Querträger geführt, so dass eine entsprechende Schwenkbewegung um eine quer zur Ernterichtung des Mähdreschers verlaufende Achse erfolgt.

Aus der EP 2 298 061 A2 ist ein selbstfahrender Mähdrescher gemäß dem Oberbegriff des Anspruches 1 bekannt.

Es ist Aufgabe der vorliegenden Erfindung, mit baulich einfachen Mitteln eine im Heckbereich eines selbstfahrenden Mähdreschers angeordnete Streueinrichtung zum Verteilen des Strohs derart zu gestalten, dass die Verteilungsbreite auch unter kritischen Bedingungen, wie zum Beispiel bei Seitenwind konstant gehalten und an die Schnittbreite des Schneidwerks angepasst werden kann.

Diese Aufgabe wird durch die Merkmale des kennzeichnenden Teils des Patentanspruchs 1 gelöst. Damit lässt sich die Lage jeder der tellerförmig ausgebildeten Schleuderscheiben verstellen, so dass sie das Stroh, gehäckselt oder ungehäckselt, unter unterschiedlichen Anstellwinkeln und somit mit unterschiedlichen Streubreiten in die Bereiche neben dem Mähdrescher fördern können. In einer Ausgangslage erstrecken die Schleuderscheiben etwa horizontal. Die Schleuderscheiben können entweder über ein mechanisches oder ein hydrostatisches Antriebssystem angetrieben werden. Entscheidend ist, dass diese Antriebssysteme eine Verstellung der Schleuderscheiben ermöglichen, bei der diese um die in Längsrichtung des Mähdreschers verlaufende Achse gekippt oder geschwenkt werden.

Demgegenüber können die Schleuderscheiben nach der DE 10 2010 003 907 A1 nicht verstellt werden, da sie durch Halterungen am Rahmen des Mähdreschers und/oder an einer Rutsche der Streueinrichtung befestigt sind. Die in dieser Druckschrift angegebene Verstellmöglichkeiten der beiden Auslässe der Streueinrichtung mit den dafür vorgesehenen Leiteinrichtungen, die zwischen den Schleuderscheiben angeordnet sind, sind aber nicht ausreichend, um im Falle von Seitenwind die Breite des Streüfeldes zu korrigieren. Nach der DE 298 22 621 U1 ist zwar ein Spreugebläse verschwenkbar an einem Querträger angeordnet, dabei wird aber kein aus einem Strohhäcksler austretendes Strohhäcksel gleichmäßig über den vom Erntevorsatz abgeernteten Streifen verteilt. Stattdessen saugen die in Spiralgehäusen angeordneten Laufräder mit ihren Flügeln die Spreu axial an und fördern diese über Tangentialauslässe auf das Feld. Die Spiralgehäuse sind dabei, wie bereits dargelegt, um eine quer zum Mähdrescher verlaufende Achse verschwenkbar geführt, so dass die jeweilige Höhenlage der Tangentialauslässe verändert werden kann.

Gemäss der Erfindung ist jede der Schleuderscheiben drehfest auf einer Antriebswelle angeordnet, die mit dem dieser zugeordneten Antriebselement verbunden ist, wobei die Antriebswelle jeder der Schleuderscheiben drehbar in einem Führungselement geführt ist. Das Führungselement ist über ein Schwenklager schwenkbar geführt, wobei eine Schwenkachse des Schwenklagers den Achsverlauf der in Längsrichtung des Mähdreschers verlaufenden Achse aufweist. Außerdem ist zwischen dem jeweiligen Führungselement und einem ortsfesten Teil des Mähdreschers jeweils ein Stellelement angeordnet. Dieses Stellelement verschwenkt das die jeweilige Schleuderscheibe aufnehmende Ende der Antriebswelle über das Führungselement. Das Führungselement führt diese Schwenkbewegung um das Schwenklager aus.

Folglich kann durch das Verschwenken der die jeweilige Schleuderscheibe aufnehmenden Antriebswelle der Anstellwinkel der Streueinrichtung derart verändert werden, dass negative Einflüsse, wie zum Beispiel ein während des Erntevorgangs herrschender Seitenwind nicht zu einer Verringerung der Streubreite führen. Bei dem örtsfesten Teil des Mähdreschers, das das Schwenklager aufnimmt und an dem sich das Stellelement abstützt, kann es sich jeweils um ein Bauelement der Streueinrichtung oder um ein Rahmenteil des Mähdreschers handeln.

Die beiden Schleuderscheiben sind vorzugsweise im vorderen Bereich, also in ihrem in Ernterichtung liegenden Bereich mit Leitblechen abgedeckt, die verhindern, dass das Stroh oder Strohhäcksel in diesem Bereich die Schleuderscheiben verlässt. Die Antriebselemente für die beiden Schleuderscheiben sind vorzugsweise als Hydromotoren ausgebildet, welche in dem jeweiligen Führungselement angeordnet sind und die in dem Führungselement drehbar gelagerte Antriebswelle mittelbar oder unmittelbar antreiben. Alternativ können die Antriebselemente für die beiden Schleuderscheiben als Winkelgetriebe ausgebildet sein, wobei eine in horizontaler Richtung verlaufende Querwelle über Kegeltriebe Wellenstummel antreibt, die wiederum über die Gelenke an den Antriebswellen angreifen. Die Schwenkbewegung der Schleuderscheiben führt dazu, dass das Stroh oder das Strohhäcksel unter einem entsprechenden Winkel seitlich des Mähdreschers verstreut wird, so dass die beispielsweise bei Seitenwind reduzierte Streubreite durch eine Veränderung dieses Winkels korrigiert werden kann. Diese Verstellung erfolgt mit baulich einfachen Mitteln, die aus einer gelenkigen Anbindung der Streuscheiben und an den Führungselementen angreifenden Stellelementen bestehen.

Erfindungsgemäß soll weiterhin das Führungselement als Rohr ausgebildet sein, in welchem die Antriebswelle über zumindest ein Wälz- oder Gleitlager gelagert ist, wobei das Rohr über das Schwenklager an einem ortsfesten Teil geführt ist. Die Schwenkachse des Schwenklagers stimmt dabei mit der in Längsrichtung des Mähdreschers verlaufenden Achse überein. Dieses Rohr nimmt in seinem Inneren den Hydromotor auf, der die in dem Rohr gelagerte Antriebswelle antreibt. Bei der alternativen Ausführung der Antriebselemente als Winkelgetriebe kann das Antriebsgelenk eine Gelenkachse aufweisen, die in der Ebene des Schwenklagers liegt, so dass bei einer entsprechenden Auslenkung des Rohres das Antriebsdrehmoment von dem Antriebselement über das Gelenk auf die Antriebsachse übertragen werden kann. Dabei kann das Antriebsgelenk als Kreuzgelenk, Doppelkreuzgelenk oder als Gleichlaufgelenk ausgebildet sein.

Weiterhin ist vorgesehen, dass das Stellelement als elektro-mechanischer Stellantrieb ausgebildet ist. Darüber hinaus besteht natürlich auch die Möglichkeit, das Stellelement als Hydraulikzylinder oder als mechanischen Stellantrieb auszubilden. Im Falle der Ausbildung als mechanischen Stellantrieb kann dieser als Spindel ausgebildet sein, an welcher von dem Fahrer des Mähdreschers manuell eine Einstellung vorgenommen wird.

Außerdem sollen die Führungselemente über die Stellelemente unabhängig voneinander in unterschiedliche Winkellagen gegenüber den Antriebselementen verstellbar sein. Tritt also auf einer Seite des Mähdreschers Seitenwind auf, der die Streuwirkung der entsprechenden Schleuderscheibe verringert, so wird diese in eine Winkellage gebracht, in der nach wie vor die gesamte abgeerntete Spur mit Stroh oder Strohhäcksel bedeckt ist. An der windabgewandten Seite kann dann eventuell die Streuscheibe derart verstellt werden, dass die Streubreite reduziert wird.

Dabei sollen die Stellelemente von einer Fahrerkabine des Mähdreschers aus über eine Bedieneinheit verstellbar sein, so dass der Fahrer, der von dieser Fahrerkabine aus über Rückspiegel beobachten kann, in wieweit das Stroh oder Strohhäcksel in der abgeernteten Spur ausgebracht wird, jederzeit mit der Bedieneinheit eingreifen und somit einen Verstellvorgang auslösen kann. Darüber hinaus wird vorgeschlagen, dass der Mähdrescher eine Einrichtung zum Erfassen von Seitenwind aufweist, deren Messwerte in einer Regeleinrichtung verarbeitet werden und zur Regelung des Stellweges der Stelleinrichtungen dienen. Derartige Einrichtungen zum Erfassen bestimmter Windverhältnisse sind aus dem Stand der Technik hinreichend bekannt und sollen für diesen Zweck verwendet werden.

Das Stroh kann weiterhin am Austritt aus der Einrichtung zur Restkornabscheidung durch einen Strohhäcksler zerkleinert werden und in dieser Form der Streueinrichtung zugeführt werden. Außerdem kann die Streueinrichtung derart angeordnet sein, dass dieser sowohl die Spreu als auch das Stroh oder Strohhäcksel aus der Einrichtung zur Restkornabscheidung zugeführt werden.

Die Zuführung des Strohs unmittelbar aus der Einrichtung zur Restkornabscheidung, des Strohhäcksels aus dem Strohhäcksler und/oder der Spreu soll weiterhin so erfolgen, dass dieses bzw. diese der Streueinrichtung, in Ernterichtung des Mähdreschers gesehen, vor den Drehachsen der Antriebsachsen zugeführt wird. In diesem Bereich ist zweckmäßigerweise eine Abweiseinrichtung vorgesehen, die verhindert, dass das Streugut in Richtung einer Reinigungseinrichtung des Mähdreschers geschleudert wird.

Schließlich kann die Streueinrichtung auch in eine Betriebsstellung verstellt werden, in der ungehäckseltes Stroh in einem Schwad auf den Stoppeln abgelegt wird. Zu diesem Zweck kann Stroh unmittelbar der Streueinrichtung zugeführt oder, sofern ein Strohhäcksler vorgesehen ist, der Antrieb des Strohhäckslers abgeschaltet werden, in der das Stroh den Mähdrescher unter Umgehung des Strohhäckslers und der Streueinrichtung verlassen kann. Der Antrieb der Streueinrichtung wird in beiden Fällen ebenfalls abgeschaltet und beide Schleuderscheiben können mit Hilfe einer Aktorik um eine quer zur Längsachse des Mähdreschers angeordnete Schwenkachse nach oben geschwenkt werden, so dass sie die Schwadablage des ungehäckselten Strohs nicht behindern.

Weiterhin soll die Bezugnahme der Patentansprüche auf die Zeichnung durch die Verwendung von Bezugszeichen die Erfindung nicht auf diese konkreten Darstellungen beschränken.

Zur weiteren Erläuterung der Erfindung wird auf die Zeichnung verwiesen, in der ein Ausführungsbeispiel der Erfindung vereinfacht dargestellt ist. Es zeigen:
- Figur 1: als schematische Darstellung eine Heckansicht eines selbstfahrenden Mähdreschers, der am Bestand erntet und bei dem Stroh oder Strohhäcksel über eine erfindungsgemäß ausgebildete Streueinrichtung in der abgeernteten Spur verteilt wird,
- Figur 2: als schematische Darstellung eine Schnittansicht eines selbstfahrenden Mähdreschers, in dessen Heckbereich ein Strohhäcksler und eine erfindungsgemäße Streueinrichtung angeordnet sind,
- Figur 3: eine separate Ansicht einer erfindungsgemäß ausgebildeten Streueinrichtung und
- Figur 4: eine Teilansicht eines selbstfahrenden Mähdreschers mit einer Schnittansicht von dessen Heckbereich, wobei eine Einrichtung, zur Restkornäbscheidung des Mähdreschers als Axialtrommelanordnung ausgebildet und das diese verlassende Stroh unmittelbar einer Streueinrichtung zugeführt wird.

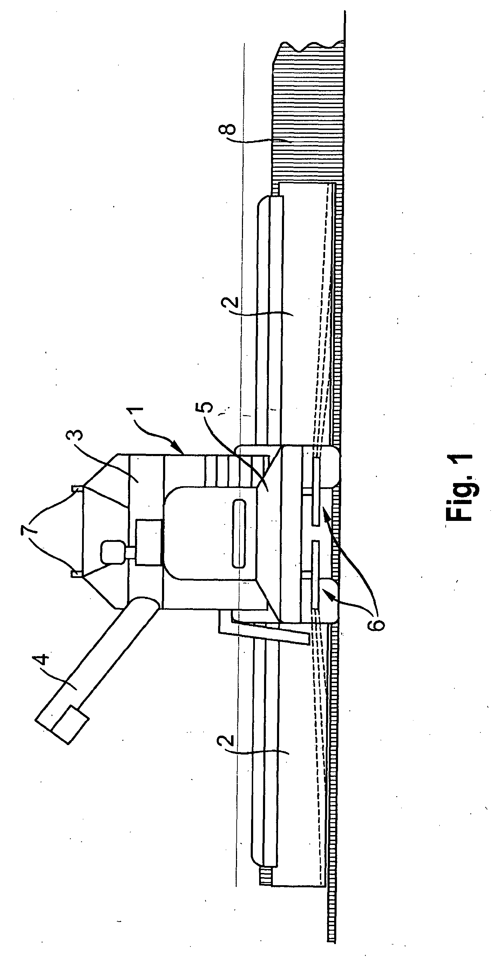

In der Figur 1 ist mit 1 ein selbstfahrender Mähdrescher bezeichnet, der in seinem Frontbereich einen vorzugsweise austauschbaren Erntevorsatz 2 aufnimmt. Dieser Erntevorsatz 2 weist eine relativ große Arbeitsbreite auf und erstreckt sich somit beidseitig in erheblichem Maße über die Breite des Mähdreschers 1, also über die Breite von dessen Fahrwerk, Dreschwerk usw. Bei dem Erntevorsatz 2 handelt es sich um ein Schneidwerk zur Ernte von Getreide oder Raps. Ferner weist der Mähdrescher 1 in seinem mittleren Bereich, hinter einer nicht näher dargestellten Fahrerkabine einen Korntank 3 auf, von welchem ein als Korntankauslaufrohr 4 ausgebildetes Förderrohr an einer, in Fahrtrichtung gesehen, linken Längsseite des Mähdreschers 1 ausgeht. Dieses Korntankauslaufrohr 4 ist in die in der Figur 1 dargestellte Stellung für eine Entleerung des Korntanks 3 ausschwenkbar. Das Korntankauslaufrohr 4 kann außerdem in eine Transportstellung überführt werden, in der es parallel zur Längserstreckung des Mähdreschers 1 verläuft.

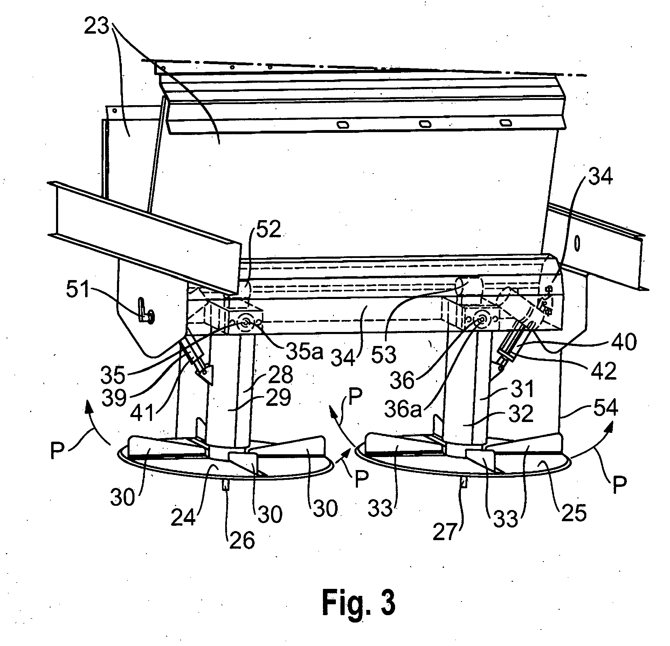

Während der Getreide- oder Rapsernte gelangen das Getreide- oder Rapsstroh in einen am heckseitigen Ende des Mähdreschers 1 vorgesehenen Strohhäcksler 5, der dieses in sehr kurze Teile häckselt und einer Streueinrichtung 6 zuführt. Diese Streueinrichtung 6 ist, wie im Zusammenhang mit der Figur 3 noch näher erläutert werden wird, in erfindungsgemäßer Weise verstellbar, wobei im Bereich des Korntanks 3 des Mähdreschers 1 Einrichtungen 7 zum Erfassen von Seitenwind in Form entsprechender Sensoren vorgesehen sind. Ein noch-nicht abgeernteter Getreide- oder Rapsbestand ist in der Figur 1 mit 8 bezeichnet. Alternativ kann der Mähdrescher 1 ohne Strohhäcksler ausgeführt sein, so dass das Stroh unmittelbar der Streueinrichtung 6 zugeführt wird.

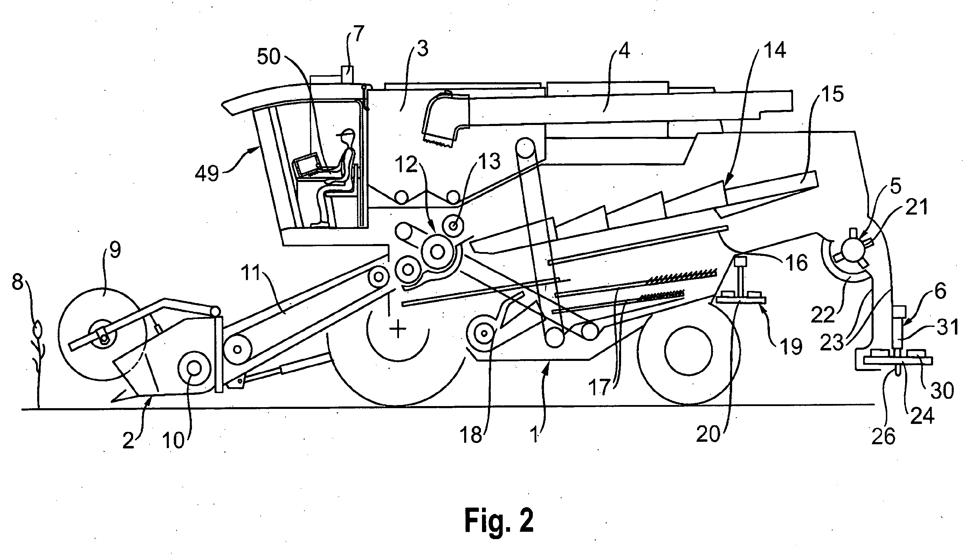

Gemäß der Figur 2 weist der Erntevorsatz 2 des Mähdreschers 1, der als Getreide- und Rapsschneidwerk ausgebildet ist, eine Haspel 9 und einen Querförderer 10 auf, wobei die Haspel 9 das über das Schneidwerk abgeschnittene Erntegut in Richtung des Querförderers 10 fördert, der dieses über gegenläufige Schnecken mittig zusammenzieht und in einen Schrägförderer 11 leitet. Dieser Schrägförderer 11 übergibt das halmförmige Erntegut an eine Dresch- und Trenneinrichtung 12, der eine Strohwendetrommel 13 nachgeschaltet ist, die das Stroh in eine Einrichtung 14 zur Restkornabscheidung transportiert. In der dargestellten Ausführungsform besteht diese Einrichtung 14 aus Hordenschüttlern 15. Die Dresch- und Trenneinrichtung 12 ist im Ausführungsbeispiel nach der Figur 2 als Tangentialdreschwerk ausgebildet. Es besteht aber auch die Möglichkeit, eine Dresch- und Trenneinrichtung nach dem Axialflussprinzip vorzusehen, bei der ein entsprechender Rotor und Körbe in Längsrichtung des Mähdreschers 1 angeordnet sind, wobei dann die Einrichtung 14 zur Restkornabscheidung integraler Bestandteil dieses Axialflusssystems ist.

Unterhalb der Hordenschüttler 15 sind ein Rücklaufboden 16 und Siebe 17 angeordnet, wobei ein Reinigungsgebläse 18 einen Luftstrom erzeugt, mittels dessen leichte Bestandteile, die als Spreu bezeichnet werden, von den Sieben 17 in Richtung des heckseitigen Bereichs des Mähdreschers 1 gefördert werden. Bestandteil dieser Spreu können Kurzstroh, Grannen, Kaff, Minderkorn, Unkrautsamen usw. sein. Diese Spreu soll im vorliegenden Fall über einen Spreuverteiler 19 gleichmäßig über die abgeerntete Spur verteilt werden, der mit Schleuderscheiben 20 versehen ist. Das von den Hordenschüttlern 15 in den heckseitigen Bereich des Mähdreschers 1 transportierte Stroh gelangt in den Strohhäcksler 5, der eine mit Messern versehene Häckseltrommel 21 und einen mit Gegenschneiden versehenen Häckselkorb 22 aufweist. Das als Strohhäcksel bezeichnete fein zerkleinerte Stroh wird über Leitbleche 23 der Streueinrichtung 6 zugeführt. Alternativ kann der Mähdrescher 1 ohne separaten Spreuverteiler 19 sowie ohne Strohhäcksler 5 ausgeführt sein, so dass ungehäckseltes Stroh und die Spreu der Streueinrichtung 6 zur Verteilung zugeführt werden. Die Ausbildung dieser Streueinrichtung 6 soll nachfolgend anhand der Figur 3 näher erläutert werden.

Die Figur 3 zeigt die Leitbleche 23, über die das Stroh der Streueinrichtung 6 in einem vorderen Bereich zugeführt wird. Die Streueinrichtung 6 besteht aus zwei Schleuderscheiben 24 und 25, die auf Antriebswellen 26 und 27 befestigt sind. Die mit der Schleuderscheibe 24 verbundene Antriebswelle 26 ist in einem als Rohr 28 ausgebildeten Führungselement 29 rotierend gelagert. Außerdem weist die Schleuderscheibe 24, die tellerförmig ausgebildet ist, an ihrer den Leitblechen 23 zugewandten Oberseite Mitnehmer 30 auf. In entsprechender Weise ist die andere Schleuderscheibe 25, die auf der Antriebswelle 27 angeordnet ist, in einem als Rohr 31 ausgebildeten Führungselement 32 drehbar gelagert und mit Mitnehmern 33 versehen. Die von der Antriebswelle 26 angetriebene Schleuderscheibe 24 dreht sich im Betrieb der Streueinrichtung 6 im Gegenuhrzeigersinn, während sich die Schleuderscheibe 25 gegenläufig, also im Uhrzeigersinn, dreht.

Wie weiterhin der Figur 3 entnommen werden kann, ist ein ortsfestes Bauteil 34 in Form eines Rahmenteils, eines Blechteils oder einer Traverse des Mähdreschers 1 vorgesehen, an dem die beiden Führungselemente 29 und 32 schwenkbar aufgehängt sind. Zu diesem Zweck ist zwischen dem ortsfesten Bauteil 34 und den beiden Rohren 28 und 31 jeweils ein Schwenklager 35 und 36 vorgesehen, dessen jeweilige Schwenkachse 35a und 36a in Längsrichtung des Mähdreschers 1 verläuft. Um diese Schwenkachsen 35a und 36a können also die Rohre 28 und 31 mit den Schleuderscheiben 24 und 25 seitwärts gerichtete Einwärts- oder Auswärtsbewegungen ausführen, die in der Figur 3 durch Kreisbögen (Pfeil P) verdeutlicht sind. Die Schwenkbewegung der Rohre 28 und 31 sowie der Schleuderscheiben 24 und 25 wird jeweils durch Endanschläge in beide Schwenkrichtungen begrenzt, um eine Kollision miteinander oder mit dem Rahmen des Mähdreschers 1 zu vermeiden. Die Endanschläge können als einander gegenüberliegend angeordnete starre Anschlagelemente ausgeführt sein. Alternativ kann eine Kulissenführung vorgesehen sein, die die Schwenkbewegung des jeweiligen Führungselementes 29 beziehungsweise 32, sowie der Schleuderscheiben 24 beziehungsweise 25 der Streueinrichtung 6 begrenzt.

Weiterhin greift an dem ortsfesten Bauteil 34 im Bereich des Rohrs 28 ein Stellelement 39 an, während dem Rohr 31 ein Stellelement 40 zugeordnet ist. Diese beiden Stellelemente 39 und 40 sind im vorliegenden Fall als Elektromotoren 41 und 42 ausgebildet, die über eine in Figur 2 innerhalb einer Fahrerkabine 49 angeordnete Steuereinheit 50 angesteuert werden. Alternativ dazu besteht auch die Möglichkeit, die im Zusammenhang mit der Figur 1 beschriebene Einrichtung 7 zum Erfassen von Seitenwind für die Ansteuerung der Elektromotoren 41 und 42 vorzusehen.

Alternativ können die Stellelemente 39 und 40 als doppelte, wirkende Hydraulikzylinder ausgebildet sein, denen über Druckleitungen ein Druckmittel zugeführt wird, wodurch eine Schwenkbewegung an den Schleuderscheiben 24 und 25 herbeigeführt wird. Die Druckleitungen werden über Wegeventile wahlweise mit Druckmittel beaufschlagt, wobei die Wegeventile ebenfalls über die in Figur 2 innerhalb der Fahrerkabine 49 angeordnete Steuereinheit 50 angesteuert werden.

Weiterhin ist der Figur 3 zu entnehmen, dass die Schleuderscheiben 24 und 25 in ihrem vorderen, dem Mähdrescher 1 zugewandten Bereich durch ein sich vorzugsweise über die Breite des Mähdreschers 1 erstreckendes Blech 54 abgedeckt sind, wodurch ein Verteilen des Strohs oder des Strohhäcksels in Fahrtrichtung unterhalb des Mähdreschers 1 verhindert wird.

Wie aus der Figur 3 hervorgeht, ist erfindungsgemäß eine Vorrichtung zum Verstellen der Streueinrichtung 6 geschaffen, mit der der Winkel verändert werden kann, unter dem das Stroh beziehungsweise Strohhäcksel im seitlichen Bereich des Mähdreschers 1 verteilt wird. Dadurch kann die Streubreite auch unter extremen Bedingungen zuverlässig eingestellt werden.

Schließlich kann die Streueinrichtung 6 auch in eine Betriebsstellung überführt werden, in der ungehäckseltes Stroh in einem Schwad auf dem Boden abgelegt wird. Hierzu werden die Hydromotoren 52 und 53 der Streueinrichtung 6 abgeschaltet und vom Hydraulikkreislauf abgekoppelt. Anschließend werden die Führungselemente 29, die darin befindlichen Hydromotoren 52 und 53 sowie die jeweiligen Schleuderscheiben 24 und 25 mit Hilfe einer Aktorik um eine quer zur Längsachse des Mähdreschers angeordnete Schwenkachse 51 nach oben geschwenkt, so dass sie außerhalb des Gutflusses des von dem Mähdrescher 1 abgegebenen Strohs sind und somit die Schwadablage des ungehäckselten Strohs nicht-behindern.

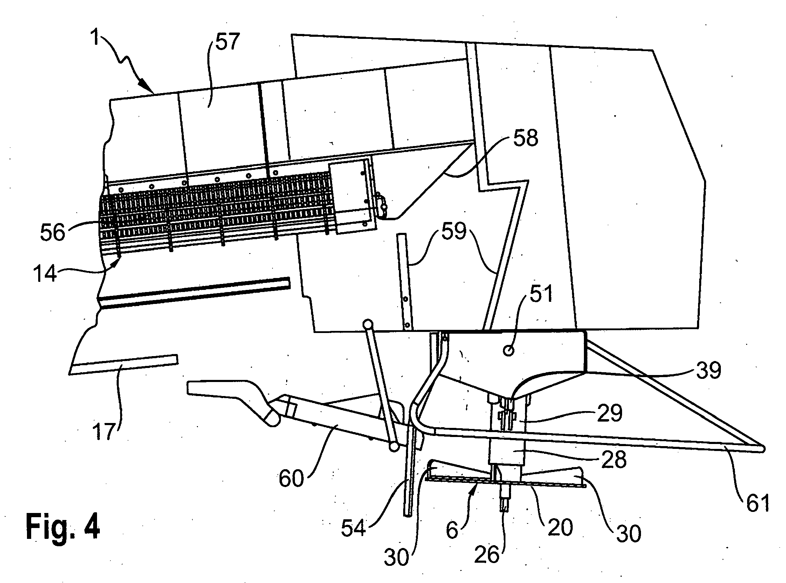

Schließlich ist in der Figur 4 ein Längsschnitt durch einen heckseitigen Bereich eines Mähdreschers 1 dargestellt, bei dem die Einrichtung 14 zur Restkornabscheidung als Axialflusssystem ausgebildet ist. Diese wist einen Abscheidekorb 56 auf, der gemeinsam mit einem Gehäuse 57 einen nicht näher dargestellten Rotor radial umschließt. In axialer Richtung schließt sich an den Abscheidekorb 56 ein Austritt 58 an, über welchen das Stroh die Einrichtung 14 verlässt. Dieses Stroh fällt dabei in einen Trichter 59 mit im Wesentlichen rechteckigem Querschnitt und gelangt in einen vorderen Bereich der dargestellten Schleuderscheibe 20, die mittels des Bleches 54 abgeschirmt ist. In der gleichen Weise wird ein Teil des Strohs auch einer weiteren, in der Schnittdarstellung nicht sichtbaren Schleuderscheibe zugeführt. Jede dieser Schleuderscheiben 20 ist dabei erfindungsgemäß verstellbar, wofür beispielsweise die Schleuderscheibe 20 mit Hilfe eines am Führungselement 29 angreifenden Stellelements 39 verschwenkt wird.

Außerdem wird von den Sieben 17 der Reinigungseinrichtung aus über ein nicht dargestelltes Reinigungsgebläse die von den Körnern getrennte Spreu auf eine Rutsche 60 gefördert, über welche sie ebenfalls der Streueinrichtung 6 zugeführt wird. Daher kann die Spreu gemeinsam mit dem Stroh oder Strohhäcksel gleichmäßig innerhalb der geernteten Spur auf dem Feld ausgebracht werden. Die Streueinrichtung 6 ist von einem Schutzrahmen 61 umgeben.

### Bezugszeichenliste

- 1: Mähdrescher
- 2: Erntevorsatz
- 3: Korntank
- 4: Korntankauslaufrohr
- 5: Stroh häcksler
- 6: Streueinrichtung
- 7: Einrichtung zum Erfassen von Seitenwind
- 8: Getreide- oder Rapsbestand
- 9: Haspel
- 10: Querförderer
- 11: Schrägförderer
- 12: Dresch- und Trenneinrichtung
- 13: Strohwendetrommel
- 14: Einrichtung zur Restkornabscheidung
- 15: Hordenschüttler
- 16: Rücklaufboden
- 17: Siebe
- 18: Reinigungsgebläse
- 19: Spreuverteiler
- 20: Schleuderscheiben von 19
- 21: Häckseltrommel
- 22: Häckselkorb
- 22: Leitbleche
- 23: Leitbleche
- 24: Schleuderscheibe
- 25: Schleuderscheibe
- 26: Antriebswelle
- 27: Antriebswelle
- 27: Antriebswelle
- 28: Rohr
- 29: Führungselement
- 30: Mitnehmer
- 31: Rohr
- 32: Führungselement
- 33: Mitnehmer
- 34: ortsfestes Bauteil
- 35: Schwenklager
- 36: Schwenklager
- 35a: Schwenkachse
- 36a: Schwenkachse
- 39: Stellelement
- 40: Stellelement
- 41: Elektromotor
- 42: Elektromotor
- 49: Fahrerkabine
- 50: Bedieneinheit
- 51: Schwenkachse
- 52: Hydromotor
- 53: Hydromotor
- 54: Blech
- 56: Abscheidekorb
- 57: Gehäuse
- 58: Austritt
- 59: Trichter
- 60: Rutsche
- 61: Schutzrahmen

## Patentansprüche

1. Selbstfahrender Mähdrescher (1) mit einer in dessen Heckbereich angeordneten, mit Stroh aus einer Einrichtung (14) zur Restkornabscheidung beaufschlägten Streueinrichtung (6) zum Verteilen des Strohs, wobei die Streueinrichtung (6) aus zumindest zwei als Würfgebläse wirkenden Schleuderscheiben (24 und 25) besteht, die in einer Arbeitsstellung im Wesentlichen hörizontal angeordnet sind, jeweils über Antriebselemente (52, 53) gegenläufig angetrieben werden und an ihren mit Stroh beaufschlagten Stirnflächen radial verlaufende Mitnehmer (30 und 33) aufweisen, wobei die Schleuderscheiben (24 und 25) jeweils um eine in Längsrichtung des Mähdreschers (1) verlaufende Achse aus einer im Wesentlichen horizontalen Lage heraus verschwenkbar sind, **dadurch gekennzeichnet, dass** jede der Schleuderscheiben (24 und 25) drehfest auf einer Antriebswelle (26, 27) angeordnet ist, die mit dem dieser zugeordneten Antriebselemente (52, 53) verbunden ist, dass die Antriebswelle (26, 27) jeder der Schleuderscheiben (24, 25) drehbar in einem Führungselement (29, 32) geführt ist, dass das Führungselement (29, 32) über ein Schwenkläger (35, 36) schwenkbar geführt ist, wobei eine Schwenkachse (35a, 36a) des Schwenklagers (35, 36) den Achsver lauf der in Längsrichtung des Mähdreschers verlaufende Achsen aufweist, und dass zwischen dem jeweiligen Führungselement (29, 32) und einem ortsfesten Bauteil (34) des Mähdreschers (1) jeweils ein das Führungselement (29, 32) verschwenkendes Stellelement (39, 40) angeordnet ist..

2. Selbstfahrender Mähdrescher (1) nach patentanspruch 1, **dadurch gekennzeichnet, dass** das Führungselement (29, 32) als Rohr (28, 31) ausgebildet ist, in welchem die Antriebswelle (26, 27) über zumindest ein Wälzt- oder Gleitlager gelagert ist, wobei das Rohr (28, 31) über das Schwenklager (35, 36) an einem ortsfesten Bauteil (34) geführt ist.

3. Selbstfahrender Mähdrescher (1) nach einem der Patentansprüche 1 oder 2, **dadurch gekennzeichnet, dass** das Stellelement (39, 40) als Elektromotor (41, 42) ausgebildet ist

4. Selbstfahrender Mähdrescher (1) nach einem der Patentansprüche 1 oder 2, **dadurch gekennzeichnet, dass** das Stellelement (39, 40) als Hydraulikzylinder ausgebildet ist.

5. Selbstfahrender Mähdrescher (1) nach einem der Patentansprüche 1 bis 4, **dadurch gekennzeichnet, dass** die Führungselemente (29 und 32) über die Stellelemente (39 und 40) unabhängig voneinander in unterschiedliche Winkellagen gegenüber dem örtfesten Bauteil (34) verstellbar sind.

6. Selbstfahrender Mähdrescher (1) nach einem der Patentansprüche 1 bis 5, **dadurch gekennzeichnet, dass** die Stellelemente (39 und 40) von einer Fahrerkabine 49) des Mähdrescher (1) aus über eine Bedieneinheit (50) oder mittels zumindest einer Einrichtung (7) zum Erfassen von Seitenwind, deren Messwerte in einer Regeleinrichtung verarbeitet werden, verstellbar sind.

7. Selbstfahrender Mähdrescher (1) nach Patentanspruch 1, **dadurch gekennzeichnet, dass** zwischen der Einrichtung (14), zur Restkornabscheidung und der Streueinrichtung (6) ein Strobhäcksler (20) angeordnet ist, welcher der Streueinrichtung (6) Ströhhäcksel zuführt

8. Selbstfahrender Mähdrescher (1) nach Patentanspruch 1, **dadurch gekennzeichnet, dass** das Stroh der Streueinrichtung (6), in Ernterichtung des Mähdreschers (1) gesehen, vor den Drehachsen der Antriebswellen (26, 27) zugeführt wird.

9. Selbstfahrender Mähdrescher (1) nach Patentanspruch 1, **dadurch gekennzeichnet, dass** die Streueinrichtung (6) in eine Betriebsstellung verstellbar ist, in der ungehäckseltes Stroh in einem Schwad auf den Stoppeln abgelegt wird.

10. Selbstfahrender Mähdrescher nach Patentanspruch 8, **dadurch gekennzeichnet, dass** zur Schwadablage des ungehäckselten Strohs, der Antrieb der Streueinrichtung (6) abgeschaltet ist und beide Schleuderscheiben (24, 25) durch eine Aktorik in, Längsrichtung des Mähdreschers nach oben geschwenkt sind.

## Claims

1. A self-propelled combine harvester (1) comprising a spreading device (6) which is arranged in the tail region thereof and which is supplied with straw from a device (14) for separating off residual grain, for distributing the straw, wherein the spreading device (6) comprises at least two centrifuging discs (24 and 25) which act as throwing blowers and which in a working position are arranged substantially horizontally, are respectively driven in opposite relationship by way of drive elements (52, 53) and at their end faces which are acted upon with straw have radially extending entrainment portions (30 and 33), wherein the centrifuging discs (24 and 25) are respectively pivotable out of a substantially horizontal position about an axis extending in the longitudinal direction of the combine harvester (1), **characterised in that** each of the centrifuging disks (24 and 25) is arranged non-rotatably on a drive shaft (26, 27) connected to the drive element (52, 53) associated therewith, that the drive shaft (26, 27) of each of the centrifuging disks (24, 25) is guided rotatably in a guide element (29, 32), that the guide element (29, 32) is guided pivotably by way of a pivot mounting (35, 36), wherein a pivot axis (35a, 36a) of the pivot mounting (35, 36) has the axis orientation of the axes extending in the longitudinal direction of the combine harvester, and that arranged between the respective guide element (29, 32) and a stationary component (34) of the combine harvester (1) is a respective control element (39, 40) for pivoting the guide element (29, 32).

2. A self-propelled combine harvester (1) according to claim 1 **characterised in that** the guide element (29, 32) is in the form of a tube (28, 31) in which the drive shaft (26, 27) is mounted by way of at least one rolling or plain bearing, wherein the tube (28, 31) is guided on a stationary component (34) by way of the pivot mounting (35, 36).

3. A self-propelled combine harvester (1) according to one of claims 1 and 2 **characterised in that** the control element (39, 40) is in the form of an electric motor (41, 42).

4. A self-propelled combine harvester (1) according to one of claims 1 and 2 **characterised in that** the control element (39, 40) is in the form of a hydraulic cylinder.

5. A self-propelled combine harvester (1) according to one of claims 1 to 4 **characterised in that** the guide elements (29 and 32) are displaceable by way of the control elements (39 and 40) independently of each other into different angular positions with respect to the stationary component (34).

6. A self-propelled combine harvester (1) according to one of claims 1 to 5 **characterised in that** the control elements (39 and 40) are displaceable from a driver cab (49) of the combine harvester (1) by way of an operating unit (50) or by means of at least one device (7) for detecting side wind, the measurement values of which are processed in a regulating device.

7. A self-propelled combine harvester (1) according to claim 1 **characterised in that** arranged between the device (14) for separating off residual grain and the spreading device (6) is a straw chopper (20) which feeds chopped straw to the spreading device (6).

8. A self-propelled combine harvester (1) according to claim 1 **characterised in that** the straw is fed to the spreading device (6), as viewed in the harvesting direction of the combine harvester (1), in front of the axes of rotation of the drive shafts (26, 27).

9. A self-propelled combine harvester (1) according to claim 1 **characterised in that** the spreading device (6) is displaceable into an operative position in which unchopped straw is deposited in a swathe on the stubble.

10. A self-propelled combine harvester according to claim 8 **characterised in that** for depositing the swathe of unchopped straw the drive of the spreading device (6) is shut down and both centrifuging discs (24, 25) are pivoted upwardly by an actuating means in the longitudinal direction of the combine harvester.

## Revendications

1. Moissonneuse-batteuse automotrice (1) comportant un dispositif d'épandage (6) disposé dans sa partie arrière, alimenté en paille provenant d'un dispositif (14) de séparation des grains restants et destiné à éparpiller la paille, le dispositif d'épandage (6) étant constitué d'au moins deux disques centrifuges (24 et 25) agissant comme des souffleuses à éjection, qui, dans une position de travail, sont disposés sensiblement horizontalement, entraînés en sens contraires par des éléments d'entraînement (52, 53) et présentent, sur leurs faces frontales alimentées en paille, des broches d'entraînement (30 et 33) s'étendant radialement, les disques centrifuges (24 et 25) pouvant chacun être déplacés d'une position sensiblement horizontale par pivotement autour d'un axe s'étendant dans la direction longitudinale de la moissonneuse-batteuse (1), **caractérisée en ce que** chacun des disques centrifuges (24 et 25) est disposé de manière fixe en rotation sur un arbre d'entraînement (26, 27) qui est relié à l'élément d'entraînement (52, 53) qui lui est associé, **en ce que** l'arbre d'entraînement (26, 27) de chacun des disques centrifuges (24, 25) est guidé en rotation dans un élément de guidage (29, 32), **en ce que** l'élément de guidage (29, 32) est guidé de manière pivotante par un palier de pivotement (35, 36), un axe de pivotement (35a, 36a) du palier de pivotement (35, 36) présentant le tracé axial des axes s'étendant dans la direction longitudinale de la moissonneuse-batteuse, et **en ce qu'**entre l'élément de guidage (29, 32) respectif et un composant fixe (34) de la moissonneuse-batteuse (1) est disposé un élément de commande (39, 40) respectif qui fait pivoter l'élément de guidage (29, 32).

2. Moissonneuse-batteuse automotrice (1) selon la revendication 1, **caractérisée en ce que** l'élément de guidage (29, 32) est conçu sous la forme d'un tube (28, 31) dans lequel l'arbre d'entraînement (26, 27) est monté par l'intermédiaire d'au moins un palier à roulement ou d'un palier lisse, le tube (28, 31) étant guidé sur un composant fixe (34) par le palier de pivotement (35, 36).

3. Moissonneuse-batteuse automotrice (1) selon l'une des revendications 1 ou 2, **caractérisée en ce que** l'élément de commande (39, 40) est conçu sous la forme d'un moteur électrique (41, 42).

4. Moissonneuse-batteuse automotrice (1) selon l'une des revendications 1 ou 2, **caractérisée en ce que** l'élément de commande (39, 40) est conçu sous la forme d'un vérin hydraulique.

5. Moissonneuse-batteuse automotrice (1) selon l'une des revendications 1 à 4, **caractérisée en ce que** les éléments de guidage (29 et 32) sont réglables indépendamment l'un de l'autre dans différentes positions angulaires par rapport au composant fixe (34) au moyen des éléments de commande (39 et 40).

6. Moissonneuse-batteuse automotrice (1) selon l'une des revendications 1 à 5, **caractérisée en ce que** les éléments de commande (39 et 40) sont réglables depuis une cabine de conduite (49) de la moissonneuse-batteuse (1) au moyen d'une unité de commande (50) ou d'au moins un dispositif (7) de détection du vent latéral dont les valeurs de mesure sont traitées dans un dispositif de régulation.

7. Moissonneuse-batteuse automotrice (1) selon la revendication 1, **caractérisée en ce qu'**entre le dispositif (14) de séparation des grains restants et le dispositif d'épandage (6) est disposé un hache-paille (20) qui amène la paille hachée au dispositif d'épandage (6).

8. Moissonneuse-batteuse automotrice (1) selon la revendication 1, **caractérisée en ce que** la paille est amenée au dispositif d'épandage (6) avant les axes de rotation des arbres d'entraînement (26, 27), par rapport au sens de récolte de la moissonneuse-batteuse (1).

9. Moissonneuse-batteuse automotrice (1) selon la revendication 1, **caractérisée en ce que** le dispositif d'épandage (6) peut être amené dans une position de fonctionnement dans laquelle de la paille non hachée est déposée en un andain sur les chaumes.

10. Moissonneuse-batteuse automotrice selon la revendication 8, **caractérisée en ce que**, pour déposer l'andain de paille non hachée, l'entraînement du dispositif d'épandage (6) est désactivé et les deux disques centrifuges (24, 25) sont basculés vers le haut dans la direction longitudinale de la moissonneuse-batteuse par un actionneur.
